(19) **Europäisches Patentamt / European Patent Office / Office européen des brevets**

(11) **EP 4 607 419 A1**

(12) **EUROPEAN PATENT APPLICATION**

(43) Date of publication:
27.08.2025 Bulletin 2025/35

(21) Application number: 25156088.4

(22) Date of filing: 05.02.2025

(51) International Patent Classification (IPC):
$G06Q\ 10/04^{(2023.01)}$ $G06Q\ 10/047^{(2023.01)}$
$G06Q\ 10/06^{(2023.01)}$ $G06Q\ 10/0631^{(2023.01)}$
$G06Q\ 50/02^{(2024.01)}$

(52) Cooperative Patent Classification (CPC):
G06Q 10/047; G06Q 10/04; G06Q 10/06;
G06Q 10/0631; G06Q 10/06311; G06Q 10/06314;
G06Q 50/02

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.02.2024 GB 202402612

(71) Applicant: AGCO International GmbH
8212 Neuhausen am Rheinfall (CH)

(72) Inventors:
• BECH, Søren
  8900 Randers (DK)
• ZHOU, Kun
  8930 Randers (DK)
• NILSSON, Rene
  8900 Randers (DK)
• LAUSDAHL, Kenneth
  8900 Randers (DK)

(74) Representative: AGCO Intellectual Property
Department
AGCO Limited
Abbey Park Stoneleigh
Kenilworth CV8 2TQ (GB)

(54) **AGRICULTURAL OPERATION PLANNING**

(57) Methods and systems are provided for planning an agricultural operation associated with an agricultural working environment. Location data indicative of a relative location of the working environment with respect to a control location is used to estimate a travel time for one or more support machines between the working environment and the control location. In addition, a processing time associated with the control location and a working time for a working machine in the working environment are estimated and used to determine a suggested number of support machines for the agricultural operation. An operational plan for the operation is then generated in dependence on the suggested number of support machines.

FIG 1

EP 4 607 419 A1

**Description**

**CROSS-REFERENCE TO RELATED APPLICATIONS**

Not applicable.

**FIELD**

Embodiments of the present disclosure relate generally to methods and systems for planning an agricultural operation.

**BACKGROUND**

A typical agricultural operation, such as a harvesting operation, may involve the use of at least one primary or "working" vehicle, such as a harvester, along with one or more support vehicles which may, for example, include a grain cart or forage wagon into which cut or harvested crop material may be unloaded. The crop material or "yield" harvested from the field is then transported to a control location, e.g. at a farm or depot, or the like for further processing and/or storage. The depot or specifically working components thereof (e.g. dryer, silage stack, silo, conveyors etc.) have a capacity that, if exceeded, could lead to delays or a reduction in the overall efficiency of the harvesting operation. For instance, the support vehicle(s) may need to wait at the depot to drop off the yield if the depot or components thereof are overloaded. Accordingly, there is a need to account for how many support vehicles can operate and how fast the working vehicle can operate in the field to make sure that depot does not exceed its capacity while keeping the machine and overall operational efficiency has high as possible.

It is an aim of an embodiment or embodiments of the present disclosure to address the above described issues.

**BRIEF SUMMARY**

A first aspect of the disclosure provides a computer implemented method for planning an agricultural operation associated with an agricultural working environment, the method comprising: receiving location data indicative of a relative location of the working environment with respect to a control location; estimating a travel time for one or more support machines between the working environment and the control location; estimating a processing time associated with the control location; estimating a working time for a working machine in the working environment; determining a suggested number of support machines for the agricultural operation in dependence on the travel time, the processing time and the working time; and generating an operational plan for the agricultural operation in dependence the determined suggested number of support machines.

Advantageously, the presently disclosed solution provides a method for planning an agricultural operation utilising a determined suggested number of support machines based on various operational variables. This may provide an operational plan which optimizes or at least reduces idle time for the working machine(s) and/or the support machine(s), thereby improving the operational efficiency of the overall agricultural operation.

The location data may comprise a distance between the working environment and the control location. This may be a travel distance between the working environment and the control location. The location data may be received from a data store, for example, a stored map which includes the locations of the control location and the working environment. The location data may be retrievable from the data store, e.g. upon receipt of a user input which may correspond to a selection of the control location and/or the working environment via a user interface. This may include selection from a menu or graphical representation of mapped data, for example.

The travel time may be estimated based on data received from the data store or a mapped representation stored therein. For instance, in some embodiments the method may comprise utilising a routing program for determining a travel time between the working environment and the control location. The travel time may be estimated utilising one or more of a distance between the working environment and the control location, e.g. utilising the received location data, and an expected speed for the one or more support machines in travelling between the working environment and the control location.

The processing time may relate to a time for a support machine to be processed at the control location. For example, the control location may comprise a depot or store for grain or other crop material and the processing time may relate to an unload time for the support machine(s) at the control location. The processing time may relate to a processing time for one or more operational components at the control location. This may include, for example, a crop processing time for a crop processing apparatus at the control location. This may include a drying time for crop material at the control location. The processing time may relate to a capacity of one or more operational components at the control location. The processing time may, therefore, relate to an operational time for a dryer at the control location. Additionally or alternatively, the one or more operational components at the control location may include a transport mechanism such as an elevator or conveyor for moving crop material at the control location.

Advantageously, the presently proposed solution may utilise a processing capacity of the control location, or specifically one or more operational components thereof, in planning the agricultural operation. Accordingly, whilst crop material might be harvestable at a faster rate at the working location, this may otherwise overload the control location resulting in a lower overall efficiency.

The working time may comprise a fill time. The fill time may comprise a time for the one or more working machines to reach a predetermined or user-selectable fill level. For instance, the fill time may comprise a time for a container (such as a grain tank) of the working machine(s) to reach a pre-determined or user-selectable fill level.

The working time may additionally or alternatively comprise a transfer time. This may relate to the time taken to transfer crop material between the working machine(s) and the support machine(s). The transfer time may comprise a time taken to unload crop material from a given working machine to a support machine, e.g. via an unloading auger or like mechanism.

The suggested number of support machines may comprise a maximum number of support machines. This may relate to a maximum number a support machines for the agricultural operation to prevent overloading of one or more operational arrangements of the agricultural operation. This may include, for example, preventing overloading of the control location, or one or more components thereof. This may include a suggested number of support machines based on the operational yield achieved by the one or more working machines and the need for those machine(s) to unload crop material therefrom.

The operational plan may comprise the suggested number of support machines for the agricultural operation. The operational plan may comprise a route plan for one or more working machines and/or one or more support machines. The operational plan may comprise a timing for the performance of one or more tasks associated with the agricultural operation. The operational plan may comprise a recommend operational setting for one or more of the working machine(s), the support machine(s) and/or the control location. This may include a recommended operational speed for components thereof, including a recommended forward speed for the working machine(s).

The agricultural operation may comprise a harvesting operation. The working machine may comprise a harvesting machine, such as a combine harvester, or a forage harvester, for example. The one or more support machines may comprise a grain cart, or forage wagon, for example. The working environment may comprise a field having crop material growing therein, and the control location may comprise a depot or the like, such as a grain store or silage stack where cut and/or harvested crop material from the working environment may be transported by the one or more support machines. The control location may comprise one or more processing components, such as a transport mechanism or dryer for crop material harvested from the working environment.

The method may comprise controlling operation of one or more operable components associated with one or more of the working machine, the support machine(s) and/or the control location in dependence on the operational plan. This may include controlling operation of a user interface, or the like, for providing a graphical representation of the operational plan. The user interface may comprise a display terminal of the working machine, and/or of the one or more support machines, for example. The user interface may comprise part of a mobile device, such as a smartphone or tablet computer carried by an operator in connection with the agricultural operation. This user interface may comprise a display of a user terminal at the control location.

The method may comprise receiving a user input relating to the operational plan. This may include receiving a user input for, for example, accepting the determined operational plan, or for inputting one or more changes thereto. The method may comprise utilising a user interface for receiving the user input.

A further aspect of the invention comprises computer software which, when executed by one or more processors, causes performance of the method of the preceding aspect of the invention.

An aspect of the invention provides a computer readable storage medium comprising the computer software of the preceding aspect of the invention.

A further aspect of the invention provides a control system for planning an agricultural operation associated with an agricultural working environment, the control system comprising one or more controllers which are collectively configured to: receive location data indicative of a relative location of the working environment with respect to a control location; estimate a travel time for one or more support machines between the working environment and the control location; estimate a processing time associated with the control location; estimate a working time for a working machine in the working environment; determine a suggested number of support machines for the agricultural operation in dependence on the travel time, the processing time and the working time; generate an operational plan for the agricultural operation in dependence the determined suggested number of support machines; and generate and output one or more control signals for controlling operation of one or more operational components associated with the agricultural operation in dependence on the generated operational plan.

The one or more controllers may be operably configured for performing any one or more of the operational steps of the preceding aspects of the invention.

The one or more controllers may be provided as part of a single control unit for performing the operational steps described herein. In alternative embodiments, the control system is provided as a distributed system across one or more locations, which may incorporate a cloud or otherwise remote based processing capability. The control system may comprise one or more controllers hosted by one or more of the working machine, the support machine(s) and/or a local control unit of the control location.

The one or more controllers may collectively comprise an input (e.g. an electronic input) for receiving one or more input signals. The one or more input signals may comprise the location data. The one or more controllers may collectively comprise one or more processors (e.g. electronic processors) operable to execute computer readable instructions for controlling operational of the control system, for example, to estimate the travel time, estimate the processing time, determine the suggested number of support machines, and/or generate the operational plan. The one or more processors may be operable to generate one or more control signals for controlling operation of one or more operational components, e.g. in accordance with the determined operational plan. The one or more controllers may collectively comprise an output (e.g. an electronic output) for outputting the one or more control signals.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

**BRIEF DESCRIPTION OF THE DRAWINGS**

One or more embodiments of the invention / disclosure will now be described, by way of example only, with reference to the accompanying drawings, in which:

    FIG. 1 is a schematic illustration of an operational setup embodying aspects of the present disclosure;
    FIG. 2 is a further schematic illustration of an operational setup embodying aspects of the present disclosure; and
    FIG. 3 is a flowchart illustrating an embodiment of a computer implemented method of the present disclosure.

**DETAILED DESCRIPTION**

The present disclosure relates to methods and systems for planning an agricultural operation associated with an agricultural working environment. In the illustrated embodiments setout herein, this includes an agricultural operation for a field 10 having crop material growing therein. As discussed herein, location data indicative of a relative location of the field with respect to a control location, here a depot 12, is obtained and used, alongside data relating to a travel time for support machine(s) here in the form of grain carts 14a, 14b between the field 10 and the depot 12, a processing time (e.g. an unload time, a transport time, a drying time or the like - discussed in detail below) associated with the control location, and a working time for a working machine, here a harvester 16 in the field 10 to determine a suggested number of support machines (grain carts 14a, 14b) for the operation. This suggested number of support machines is used to generate an operational plan for the agricultural operation which can, in embodiments, be stored at a (e.g. remote) data store 104 for subsequent retrieval and/or presented to an operator via a user interface, e.g. a display terminal associated with the depot 12 or other control location.

Operational Use

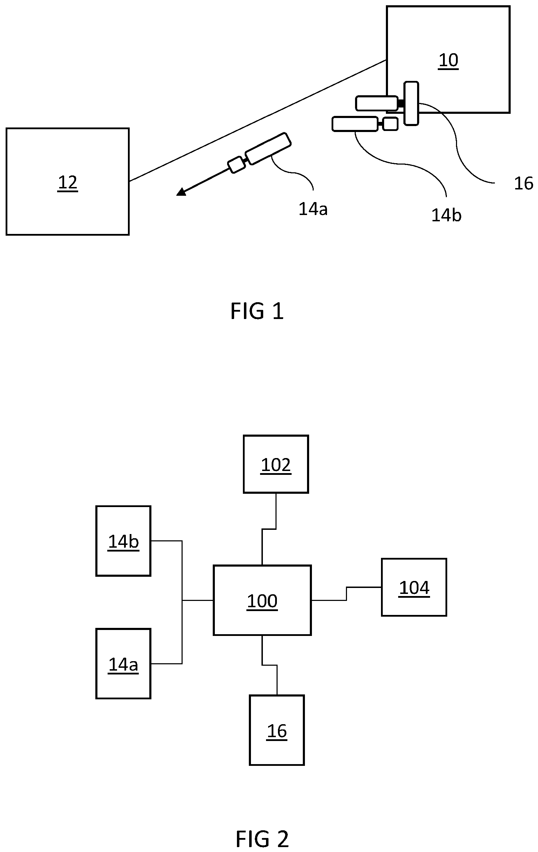

FIG. 1 illustrates an operational setup illustrating aspects of the present disclosure. A working environment in the form of a field 10 is shown, with a working machine in the form of a combine harvester 16 (referred to interchangeably herein as a "harvester" 16) operating therein. In the illustration, the harvester 16 is supported by a pair of support machines in the form of first and second grain carts 14a, 14b. As will be appreciated, the grain carts 14a, 14b support the harvesting operation by receiving harvested crop material, specifically grain therefrom during an unloading operation, and transporting the unloaded grain material to a control location - depot 12 - which may have a grain store or other storage, transport and processing components, e.g. a dryer and the like for further processing and storage of the harvested crop material. Once the harvested material is unloaded from the grain cart 14a, 14b, the cart may return to the field 10 to receiving a next unload from the harvester 16.

In FIG. 1 two support machines are shown - grain carts 14a, 14b - allowing for one cart (here cart 14b) to receive crop material from the harvester 16 whilst the other grain cart 14a transports a crop load to the depot 12. It would follow that an increase in the number of grain carts would improve efficiency, e.g. by preventing the harvester 16 from having to stop due to being full by always having a grain cart available to unload into. However, this process is also limited by the depot capacity, and specifically by how fast the depot 12 or components thereof can process the crop material it receives from the grain carts 14a, 14b. Accordingly, there is a need for a method and system which can account for numerous variables and make a recommendation on a suggestion or optimal number of support machines for a given operation, and generate an operational plan therefrom for the field 10 and the machines 14a, 14b, 16 working therein.

Whilst described here for an implementation for harvesting grain crop, the present disclosure is equally applicable for other crop types, such as forage crops. Here, the harvester may be a forage harvester, and the support machines may be in the form of forage wagons for receiving cut crop material from the forage harvester. The depot may include a silage stack or the like, and the processing time may be related to properties of the stack, such as a compaction rate, etc.

Turning to FIG. 2, which illustrates a system embodying aspects of the present disclosure. Specifically, FIG. 2 illustrates a distributed system across one or more locations, physical or cloud based and the communication link therebetween. The system employs a central control system 100 which incorporates one or more processors for performing the operational steps of the method 200 described hereinbelow. In the illustrated embodiment, the control system 100 is hosted on a remote server separate from the machines 14a, 14b, 16 and the depot 12 (or a local control unit thereof), however, it will be appreciated that the control system 100 could be hosted by one or more control units local to these components of the system, or distributed in some manner therebetween. For instance, the control system may be provided as part of the processing capability of the harvester 16, or a control unit at the depot 12.

Each of the machines 14a, 14b, 16 are operably coupled to the control system 100 over a data link, which may be any communications link, e.g. over an internet or cellular connection, for example. Similarly, the control system 100 is connected via a communications link to a data store 102 having location data stored therein, including location data relating to the relative locations of the field 10 and the depot 12. This may comprise a mapping database, for example, accessible by the control system 100 for retrieving location data therefrom for use in the present application. As discussed herein, this location data is used to estimate a travel time between the field 10 and the depot 12 and feeds into the determination of the suggested number of support machines for the operation. In the illustrated embodiment, the control system 100 is additionally linked to a remote data store 104 for storing the generated operational plan for subsequent access by an operator associated with the operation. Again, this may be housed on a remote or cloud based server 104 which is accessibly by the control system and optionally one or more of the machines 14a, 14b, 16 and a control unit at the depot 12, for example, and/or one or more additional control units associated with the task, e.g. an operator device such as a compute, portable device, smartphone, tablet computer or the like for retrieving the generated operational plan. It will be appreciated that the generated operational plan may, in alternative embodiments, be stored local to the control system 100, e.g. as part of a memory means thereof, and be provided at or be accessible by the working machines 16, support machines 14a, 14b and/or depot 12 directly therefrom.

Method

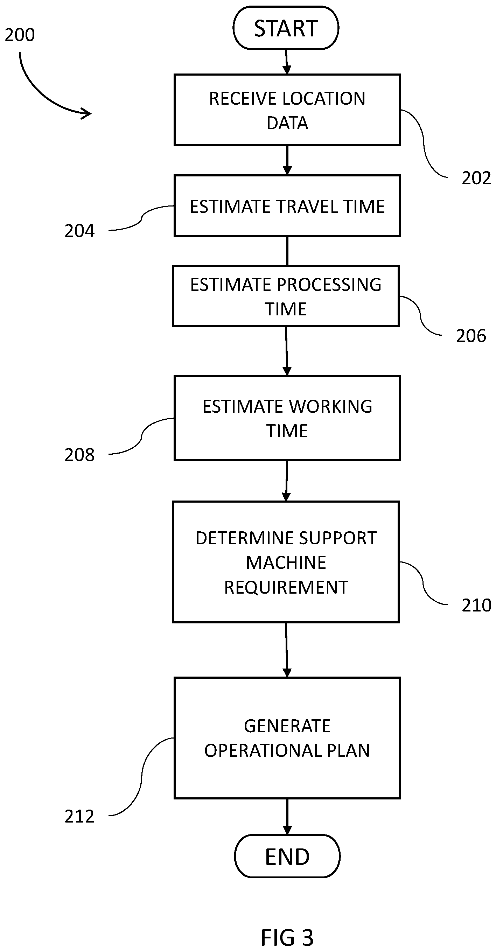

FIG. 3 is a flowchart illustrating an embodiment of a method 200 of the present disclosure, outlining how a suggested number of support machines is determined and utilised to generate the operational plan.

In step 202, location data is received. The location data is indicative of a relative location of the field 10 and depot 12. Here, the location data comprises a distance between the field 10 and the depot 12 retrieved, in the illustrated embodiment, from the data store 102 and the mapping database stored therein. The distance can include a travel distance between the field 10 and the depot 12, relating to the distance a support machine - e.g. grain cart 14a, 14b is required to traverse to travel between the two. As discussed, the location data may be retrieved upon receipt of a user input, which can include a selection of the depot location and/or the field location via a user interface, which may include selection from a menu or graphical representation of mapped data, as will be appreciated.

In step 204, a travel time is estimated in dependence on the location data. For instance, utilising the travel distance and a routing program a total travel time between the field 10 and the depot 12 can be estimated. This may be based on one or more of the travel distance between the field 10 and the depot 12, an expected speed for the grain carts 14a, 14b when travelling between the two and optionally real time data, e.g. traffic data and the like if travelling on public roads.

At step 206, a processing time is determined associated with the depot 12. This processing is dependent on a number of factors, but is provided to quantify, in terms of time, time for which the grain carts 14a, 14b may be present at the depot 12, and/or the time taken for crop material delivered by the carts 14a, 14b to be processed by the depot 12 or one or more components thereof, and for the depot 12 to be ready to receive another crop load from the next support machine. For instance, the depot 12 may include a store for grain or other crop material and the processing time may relate to an unload time for the grain carts 14a, 14b into the store. The processing time may relate to a processing time for one or more operational components at the depot 12. This may include, for example, a crop processing time for a crop processing apparatus at the depot, including optionally a drying time for crop material utilising a drying apparatus. The processing time can relate to a capacity of one or more operational components at the depot 12, which can include a transport mechanism such as an elevator or conveyor for moving crop material at the depot 12.

At step 208, a working time is estimated for the harvester 16 at the field. Again, whilst it may be dependent on a number of factors, the working time is intended to be incorporated as a guide to the time interval required between successive requirements for the support machines at the field 10. Here, this comprises a time interval between successive unloading operations from the harvester 16 to the grain carts 14a, 14b. Accordingly, the working time here comprises a fill time relating to the time taken for the harvester 16 to reach a predetermined or user-selectable fill level. The working time may additionally or alternatively comprise a transfer time relating to a time taken to transfer crop material from the harvester 16 to the grain carts 14a, 16b, e.g. utilising an unloading auger or like mechanism.

At step 210, a suggested number of support vehicles is determined utilising each of the travel time, the processing time and the working time. Specifically, the suggested number of support vehicles is determined utilising the following:

$$n = \left\lceil \frac{\frac{2 \cdot d}{s}}{e - f} \right\rceil$$

where n is the number of support vehicles, d is the distance from the field 10 to the depot 12, s is the travel speed for the grain carts 14a, 14b (d/s being equivalent to the determined travel time, as set out above), e is the processing time and f is the working time, all determined as setout herein.

As an example, in a simplified use case we consider the following input variables:

• Working time, f, is 300 seconds;
• Grain cart speed = 8.3 m/s ≈ 30 km/h;
• Field to depot distance is 2.5 km; and
• Processing time = 600 seconds.

Utilising these numbers, a suggested number of support vehicles / grain carts 14a, 14b is determined as three. If fewer support vehicles are used it is more likely that the harvester 16 would be required to slow down or wait in the field 10 for another grain cart 14a, 14b to arrive and unload into before continuing the harvesting operation. If more than three support vehicles are used it is more likely that the grain carts 14a, 14b would have to wait at the depot 12 whilst the cart ahead is processed, which may not be an efficient use of resources.

In step 212, an operational plan is then generated on the basis of the determined number of support machines. This can include simply providing a suggestion for the number of support machines, however in an extension, this may include a route plan for one or more working machines and/or one or more support machines involved in the task, e.g. where additional working environments are involved and machines may be shared between the two. The operational plan can additionally comprise a timing for the performance of one or more tasks associated with the agricultural operation, which might include, for example, a recommendation of which field 10 to work at any given time based on the number of support machines suggested and those available to the operator. The operational plan may comprise operational settings or recommendations therefore for the operation, e.g. providing a recommendation for a forward or operational speed for the harvester 16 for a given number of support machines being available at any given time.

General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

Claims

1. A computer implemented method for planning an agricultural operation associated with an agricultural working environment, the method comprising:

receiving location data indicative of a relative location of the working environment with respect to a control location;
estimating a travel time for one or more support machines between the working environment and the control location;
estimating a processing time associated with the control location;
estimating a working time for a working machine in the working environment;
determining a suggested number of support machines for the agricultural operation in dependence on the travel time, the processing time and the working time; and
generating an operational plan for the agricultural operation in dependence the determined suggested number of support machines.

2. A method of claim 1, wherein the location data comprises a travel distance between the working environment and the control location.

3. A method of claim 1 or claim 2, wherein the travel time is estimated based on data received from a data store or a mapped representation stored therein; and wherein the method comprises utilising a routing program for determining a travel time between the working environment and the control location.

4. A method of claim 4, wherein the travel time is estimated utilising one or more of a distance between the working environment and the control location and an expected speed for the one or more support machines in travelling between the working environment and the control location.

5. A method of any preceding claim, wherein the processing time relates to a time for a support machine to be processed at the control location.

6. A method of claim 5, wherein the control location comprises a depot or store for grain or other crop material and the processing time relates to an unload time for the support machine(s) at the control location.

7. A method of any preceding claim, wherein the processing time relates to a processing time for one or more operational components at the control location.

8. A method of claim 7, wherein the processing time comprises a crop processing time for a crop processing apparatus at the control location.

9. A method of claim 8, wherein the crop processing time includes a drying time for crop material at the control location.

10. A method of any preceding claim, wherein the working time comprises a fill time, the fill time comprising a time for the one or more working machines to reach a predetermined or user-selectable fill level.

11. A method of any preceding claim, wherein the working time comprises a transfer time relating to the time taken to transfer crop material between the working machine(s) and the support machine(s).

12. A method of any preceding claim, wherein the suggested number of support machines comprises a maximum number of support machines relating to a maximum number a support machines for the agricultural operation to prevent overloading of one or more operational arrangements of the agricultural operation.

13. A method of any preceding claim, wherein the operational plan comprises the suggested number of support machines for the agricultural operation, a route plan for one or more working machines and/or one or more support machines, and/or a timing for the performance of one or more tasks associated with the agricultural operation.

14. A method of any preceding claim, wherein:

the agricultural operation comprises a harvesting operation;
the working machine comprises a harvesting machine;
the one or more support machines comprise a grain cart or forage wagon;
the working environment comprises a field having crop material growing therein; and
the control location comprises a depot where cut and/or harvested crop material from the working environment is transported by the one or more support machines.

15. A method of any preceding claim, comprising controlling operation of one or more operable components associated with one or more of the working machine, the support machine(s) and/or the control location in dependence on the operational plan.

16. A method of claim 15, comprising controlling operation of a user interface for providing a graphical representation of the operational plan.

17. A method of claim 16, wherein the user interface comprises: a display terminal of the working machine and/or of the one or more support machines; comprising part of a mobile device carried by an operator in connection with the agricultural operation; and/or comprises a display of a user terminal at the control location.

18. A method of any preceding claim, comprising receiving a user input relating to the operational plan.

19. A control system for planning an agricultural operation associated with an agricultural working environment, the control system comprising one or more controllers which are collectively configured to:

receive location data indicative of a relative location of the working environment with respect to a control location;
estimate a travel time for one or more support machines between the working environment and the control location;
estimate a processing time associated with the control location;

estimate a working time for a working machine in the working environment;

determine a suggested number of support machines for the agricultural operation in dependence on the travel time, the processing time and the working time;

generate an operational plan for the agricultural operation in dependence the determined suggested number of support machines; and

generate and output one or more control signals for controlling operation of one or more operational components associated with the agricultural operation in dependence on the generated operational plan.

FIG 1

FIG 2

FIG 3

Europäisches
Patentamt

European
Patent Office

Office européen
des brevets

# EUROPEAN SEARCH REPORT

**Application Number**

EP 25 15 6088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/185522 A1 (GRAF PLESSEN MOGENS [CH]) 11 October 2018 (2018-10-11)<br>* figures 2,11,12 *<br>* claims 1,15 *<br>* Algoritm 5 *<br>* paragraph [0001] *<br>* paragraph [0004] *<br>* paragraph [0023] *<br>* paragraph [0029] - paragraph [0030] *<br>* paragraph [0040] - paragraph [0056] *<br>- - - - - | 1-19 | INV.<br>G06Q10/04<br>G06Q10/047<br>G06Q10/06<br>G06Q10/0631<br>G06Q50/02 |
| A | JP 2013 156835 A (KAJIMA CORP)<br>15 August 2013 (2013-08-15)<br>* paragraph [0009] - paragraph [0023] *<br>* paragraph [0049] - paragraph [0061] *<br>- - - - - | 1-19 | |
| A | US 2018/232674 A1 (BILDE MORTEN LETH [DK])<br>16 August 2018 (2018-08-16)<br>* paragraph [0006] - paragraph [0036] *<br>- - - - - | 1-19 | |

|  |  |
|---|---|
|  | **TECHNICAL FIELDS SEARCHED (IPC)** |
|  | G06Q |

The present search report has been drawn up for all claims

| Place of search | Date of completion of the search | Examiner |
|---|---|---|
| Munich | 1 July 2025 | Shivaldova, Veronika |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 6088

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | Publication date |
|---|---|---|---|
| WO 2018185522 A1 | 11-10-2018 | NONE | |
| JP 2013156835 A | 15-08-2013 | JP 6013739 B2 | 25-10-2016 |
| | | JP 2013156835 A | 15-08-2013 |
| US 2018232674 A1 | 16-08-2018 | EP 3371756 A1 | 12-09-2018 |
| | | US 2018232674 A1 | 16-08-2018 |
| | | WO 2017077113 A1 | 11-05-2017 |

EPO FORM P0459

For more details about this annex : see Official Journal of the European Patent Office, No. 12/82